# EUROPÄISCHE PATENTANMELDUNG

(11) **EP 2 679 900 A1**
(43) Veröffentlichungstag der Anmeldung: **01.01.2014**
(21) Anmeldenummer: 13172200.1
(22) Anmeldetag: 17.06.2013
(51) Int. Cl.: F23L 15/02, F23D 11/00, F23D 11/44, F28D 7/12, F28D 21/00

(54) **Ölvormischbrenner**

(30) Priorität: 26.06.2012 DE 102012012541
(71) Anmelder: ROBERT BOSCH GMBH, 70442 Stuttgart (DE)
(72) Erfinder: Rausch, Rainer, 36304 Alsfeld (DE); Geschwend, Thomas, 35578 Wetzlar (DE); Medeiros, Antonio, 35423 Lich (DE); Cecen, Sadik, 35102 Lohra (DE); Ripplinger, Hans-Joachim, 35460 Staufenberg (DE); Lang, Raphael, 35305 Gruenberg (DE); Schroeder, Thorsten, 35305 Gruenberg (DE); Hetche, Juergen, 35102 Lohra (DE)

(57) **Zusammenfassung**

Die Erfindung betrifft einen Ölvormischbrenner mit einem Brennelement (1), einer Brenneroberfläche auf der äußeren Mantelfläche, einer Verteilkammer (2) unterhalb der Brenneroberfläche, einer zentralen Öleinspritzvorrichtung (3), einem an ein stromaufwärts angeordnetes Gebläse angeschlossenen Verbrennungsluftkanal (4) sowie einem Luftwärmetauscher für die Vorwärmung der Verbrennungsluft im Bereich der Brenneroberfläche. Aufgabe der Erfindung ist es, bei einem Ölvormischbrenner die Verbrennungsqualität und die Robustheit, besonders im Hinblick auf Modulationsfähigkeit, zu optimieren. Erfindungsgemäß ist daher vorgesehen, dass jeweils Innenrohr (6) und Außenrohr (7) eines Doppelrohrelementes (6) exzentrisch ineinander angeordnet sind. Damit wird eine Temperaturvergleichmäßigung im Inneren eines Doppelrohrelementes (6) erreicht.

## Beschreibung

Die Erfindung betrifft einen Ölvormischbrenner nach dem Oberbegriff des Patentanspruches 1.

Derartige Ölvormischbrenner besitzen ein zylindrisches Brennelement mit einer Brenneroberfläche auf der äußeren Mantelfläche. Um eine zentrale Öleinspritzvorrichtung herum und /oder davor befindet sich in der Regel eine Verteilkammer für den entstehenden Ölnebel, damit dieser gleichmäßig von innen her die Brenneroberfläche erreicht. In die Verteilkammer gelangt Verbrennungsluft über mindestens eine Einströmöffnung im Bereich der Öleinspritzvorrichtung, wobei es sich um ein Einspritzventil oder eine Öldüse, welche an einem Düsenstock mit Ölvorwärmer befestigt ist, handeln kann. Stromaufwärts der Öleinspritzvorrichtung befindet sich ein Verbrennungsluftkanal mit Verbindung zu einem Gebläse.

Insbesondere bei Gasbrennern, die modulierend betrieben werden, also bei denen der Leistungsbereich zwischen einem geringen Anteil der Maximalleistung und der Maximalleistung gesteuert werden kann, haben sich die sogenannten Vormischbrenner durchgesetzt. Bei diesen Brennern wird der Brennstoff und die zu dessen Verbrennung erforderliche Verbrennungsluft von der Flamme örtlich getrennt vermischt und dann verbrannt. Dazu wird meist ein zylindrisches Brennelement als Flammenhalter eingesetzt, der für das Brennstoff-/Luft-Gemisch durchlässig ist und einen Innenraum umschließt, dem das Brennstoff-/Luft-Gemisch zugeführt wird. Mit dieser Technologie lassen sich kleine Flammen mit guten Abgaswerten, relativ kleine Flammenhalter und große Modulationsbereiche verwirklichen.

Das Grundprinzip eines Ölvormischbrenners ist die Vermischung von fein zerstäubtem Öl mit vorgewärmter Luft. Durch dieses Prinzip ist es möglich, dass sich zum Beispiel eine sogenannte kalte Flamme bildet, so dass der Brennstoff über eine Oberfläche verbrannt werden kann. Die Oberflächenverbrennung ist allerdings auch ohne kalte Flamme möglich. Generell ist das Erwärmen von Luft auf Grund der geringen Wärmekapazität relativ schwierig, weil dazu entweder ein effektiver Wärmeübergang über eine Wand auf den Luftstrom und/oder hohe Wandtemperaturen notwendig sind.

Ein Ölvormischbrenner ist zum Beispiel aus der DE 10 2006 000 174 A1 bekannt. Dabei wird die Tatsache genutzt, dass heiße Luft das Öl verdampft und somit ein Gasgemisch gebildet werden kann, welches wie bei einem Gas-Vormischbrenner durch den Flammhalter hindurch tritt und abbrennt. Durch die Zumischung von Abgas zur Verbrennungsluft zur Luftvorwärmung wird zudem die Bildung von Stickoxiden verringert und dadurch soll sich auch das Anlaufverhalten verbessern, weil der Betriebspunkt relativ schnell erreicht wird. Die Verbrennungsluft wird zur Wärmeaufnahme durch eine mindestens abschnittsweise über eine Brenneroberfläche ragende, von der Brennerflamme beabstandete Leiteinrichtung geführt und in einer Düse in der Leiteinrichtung beschleunigt, damit das Abgas aus dem Brennraum angesaugt und mit der Luft vermischt werden kann.

Auch die DE 26 43 293 A1 beschreibt einen solchen Kanal für die Verbrennungsluft, der als Zylinder um den hinteren Bereich eines Brennstabes bzw. Brennelementes angeordnet ist. Da für die Vermischung und die Verbrennungsreaktion ein bestimmter Mindestbrennelementdurchmesser erforderlich ist, kann dieser Aufbau allerdings zu einem gegenüber bekannten Bauformen insgesamt relativ großen Feuerraum führen.

Weiterhin sind aus der DE 21 07 514 A eine Vorrichtung zum Heizen mit Infrarotstrahlung und aus der US 1 082 576 A ein Ölbrenner mit flächig unterhalb der Brenneroberfläche angeordneten, abgeschlossenen, flächig durchgehenden Kanälen zur Luftvorwärmung bekannt. Aus diesen nicht unterbrochenen Kanälen wird in beiden Fällen die vorgewärmte Luft zum Zentrum mit der Brennstoffzufuhr zurück geleitet und dort mit Brennstoff vermischt. Von diesem Zentrum aus tritt das Gemisch in die Brennzone ein, ohne wieder in die Nähe des zur Vorwärmung dienenden Luft-Strömungsweges zu kommen.

Aus der DE 20 2008 005 913 U1 ist ein Ölvormischbrenner bekannt, bei dem ein Luftwärmetauscher für die Vorwärmung der Verbrennungsluft zugeordnet ist, welcher aus mindestens einem das Brennelement mit Abstand umgreifenden Kanal besteht. Dieser besteht aus nebeneinander verlaufenden, parallel angeordneten, aber in der Reihe durchströmten Kanälen, die beide von außen mit Wärme aus der Brennerflamme beaufschlagt werden.

Die DE 10 2010 046 733 A1 betrifft einen Luftwärmetauscher aus mindestens einem Doppelrohrelement mit einem in Reihe durchströmten Innenrohr und einem zu diesem konzentrischen Außenrohr. Dabei ist der Luftwärmetauscher oberhalb der Brenneroberfläche angeordnet und besteht aus mehreren symmetrisch über den Umfang verteilten, sich achsparallel zum Brennelement mindestens über einen Teil dessen Länge erstreckenden und parallel durchströmten Doppelrohrelementen. Dabei weist jedes Doppelrohrelement an der Stirnseite des freien Endes eine Umlenkzone als Verbindung zwischen Innenrohr und einem zwischen Innenrohr und Außenrohr gebildeten Ringraum auf.

Somit ist jedes Doppelrohrelement an seiner Eintrittsseite des Innenrohres mit dem Verbrennungsluftkanal verbunden. Dort tritt die Verbrennungsluft ein und gelangt jeweils nach Verlassen des Innenrohres in einer Umlenkzone an der Stirnseite des freien Endes in den zwischen Innenrohr und Außenrohr gebildeten Ringraum. In diesem strömt die bereits vorgewärmte Luft in Richtung öleinspritzvorrichtungsnaher Stirnseite zurück und nimmt weitere Wärme auf. Sie tritt dort als vorgewärmte Verbrennungsluft im Bereich um die Öleinspritzvorrichtung in die Verteilkammer ein. In einer bevorzugten Ausführungsform überragt in einem Doppelrohrelement am öleinspritzvorrichtungsnahen Ende das Innenrohr das Außenrohr in Längsrichtung, so dass es den mit der Verteilkammer in Verbindung stehenden Ausmündungsbereich des Ringspalts durchgreift und durch eine Begrenzungswand bis in den Verbrennungsluftkanal hinein reicht.

Der Erfindung liegt daher die Aufgabe zugrunde, bei einem Ölvormischbrenner die Verbrennungsqualität und die Robustheit, besonders im Hinblick auf Modulationsfähigkeit, zu optimieren.

Erfindungsgemäß wurde dies mit den Merkmalen des Patentanspruches 1 gelöst. Vorteilhafte Weiterbildungen sind den Unteransprüchen zu entnehmen.

Der Ölvormischbrenner ist dadurch gekennzeichnet, dass jeweils Innenrohr und Außenrohr eines Doppelrohrelementes exzentrisch ineinander angeordnet sind. Dabei bleibt der jeweils zwischen Innenrohr und Außenrohr gebildete freie Querschnitt des Ringraumes eines Doppelrohrelementes im Verlauf des Strömungsweges der Verbrennungsluft etwa gleich.

In einer vorteilhaften Ausführungsform ist vorgesehen, dass jeweils alle Innenrohre auf einem gemeinsamen Teilkreis angebracht sind, welcher sich vom gemeinsamen Teilkreis aller Außenrohre der Doppelrohrelemente unterscheidet. Vorzugsweise weist der Teilkreis für alle Innenrohre einen größeren Durchmesser auf als der Teilkreis für alle Außenrohre.

Der Teilkreis für alle Innenrohre ist in einer besonders bevorzugten Ausführungsform der Erfindung im Durchmesser so viel größer als der Teilkreis für alle Außenrohre gewählt, dass sich jeweils über den Querschnitt des Ringraumes eines Doppelrohrelementes ein gleichmäßiger Temperaturgradient einstellt.

Mit den erfindungsgemäßen Maßnahmen werden bei Ölvormischbrennern sowohl die Verbrennungsqualität als auch die Robustheit verbessert. Insbesondere für modulierenden Betrieb ist die erfindungsgemäße Anordnung mit dem integrierten Luftwärmetauscher vorteilhaft. Dies trifft für Brenner mit einem zylindrischen Brennelement genauso zu wie für Flächenbrenner mit einer horizontalen Brenneroberfläche und dem erfindungsgemäßem Aufbau. Die Flamme brennt an bzw. in der Brenneroberfläche, so dass dabei oberhalb davon Energie aus der Flamme ausgekoppelt und zur Erwärmung der Verbrennungsluft genutzt wird. Damit entfällt eine elektrische Luftvorwärmung während des stationären Brenner-Betriebszustandes. Dies wirkt sich positiv auf die Energiebilanz des Brenners aus.

Mit der Erfindung wird der Wärmeeintrag in den Doppelrohrelementen gezielt gesteuert, denn über die Querschnittsgestaltung wird auch die Strömungsgeschwindigkeit, und somit die Wärmeaufnahmefähigkeit bzw. auch die Wärmebelastung der Rohroberflächen in den jeweiligen Kanalbereichen gezielt beeinflusst. Das exzentrisch nach außen hin versetzte Innenrohr gibt somit auf der der Brenneroberfläche zugewandten Seite eines Doppelrohrelementes einen größeren Strömungsquerschnitt im Ringspalt frei als nach außen hin. Dadurch wird innen, unter der stark mit Wärme beaufschlagten Rohrwand des Außenrohres im Verhältnis mehr Wärme abgeführt als auf der nach außen gerichteten Seite, weil der größere Verbrennungsluftanteil im entsprechend großvolumigeren Kanalbereich strömt. Ausgleichend dazu ist der bereits vorgewärmte Verbrennungsluftstrom im Innenrohr mehr nach außen hin versetzt, so dass der relativ heiße Innenkanal eher den von der Brenneroberfläche abgewandten Bereich eines Doppelrohrelementes aufheizt.

Ein weiterer Vorteil der erfindungsgemäß integrierten Luftvorwärmungsfunktion ist, dass mit zunehmender Brenneroberfläche, beispielsweise bei einem Brennelement für größere Leistungsbereiche, auch die Wärmetauscheroberfläche in gleichem Maße erweiterbar ist, indem einfach längere Doppelrohrelemente zum Einsatz kommen. Damit bleibt die angestrebte Lufttemperatur konstant. Jedes Rohr wird durch seine spezifische Leistungsdichte und die Rohr-Anzahl in Abhängigkeit von der Gesamtleistung definiert. Außer als an den Doppelrohrelementen des Luftwärmetauschers sind dadurch an der Peripherie bzw. sonstigen Brennerkomponenten keine konstruktiven Änderungen für die Darstellung unterschiedlicher Brenner-Leistungsgrößen nötig. Der sonstige Brenneraufbau bleibt somit genauso erhalten wie Anforderungen an den umgebenden Feuerraum.

Mit dem erfindungsgemäßen Luftwärmetauscher soll Verbrennungsluft in allen Brenner-Betriebspunkten mit einer Mindesttemperatur von ca. 350 °C bereitgestellt werden. Dabei ist zu beachten, dass unter Einhaltung die maximal zulässigen Oberflächentemperatur am Luftwärmetauscher die Länge von Rohrelementen herkömmlicher Bauart, d. h. in Form von glatten, U-förmigen Wärmetauscher-Bögen, sowie die Anzahl der Rohre nicht beliebig gesteigert werden kann. Neben den Grenzen in der Einhaltung des maximalen Biegeradius steigen mit längeren herkömmlichen Rohren ansonsten auch die Materialtemperaturen weiter an und bringen eine Gefahr des Durchbiegens mit sich. Im Gegensatz dazu ist erfindungsgemäß aber eine Längenausdehnung aufgrund thermischer Belastung möglich, da jedes Doppelrohrelement des Luftwärmetauschers nur einseitig eingespannt ist. Größere, einem Brennelement entsprechend angepasste Längen bzw. Auskragungen von Doppelrohrelementen lassen sich durch gegenseitige Abstützung von Innen- und Außenrohr realisieren.

Die Zeichnung stellt ein Ausführungsbeispiel der Erfindung dar. Es zeigt:

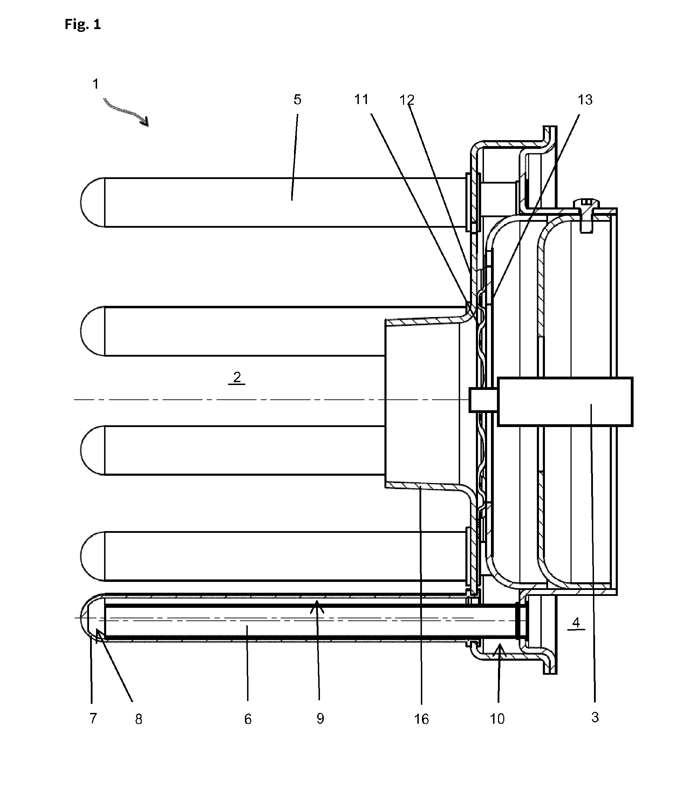

- Fig. 1:: einen Ölvormischbrenner im Längsschnitt und

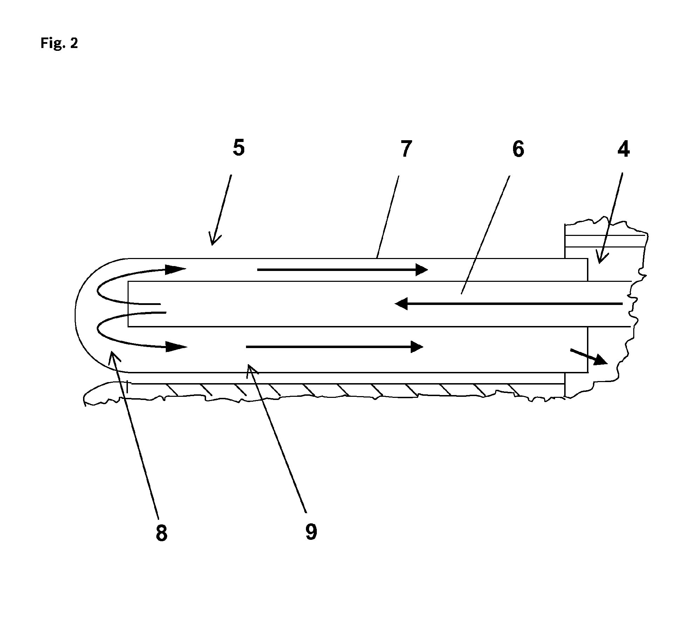

- Fig. 2:: einen Längsschnitt durch eine Teil eines Luftwärmetauschers.

Der Ölvormischbrenner besteht im Wesentlichen aus einem Brennelement 1 mit einer nicht dargestellten Brenneroberfläche auf der äußeren Mantelfläche, einer Verteilkammer 2 unterhalb der Brenneroberfläche, einer zentralen Öleinspritzvorrichtung 3, einem an ein stromaufwärts angeordnetes Gebläse angeschlossenen Verbrennungsluftkanal 4 sowie einem Luftwärmetauscher für die Vorwärmung der Verbrennungsluft im Bereich der Brenneroberfläche. Dieser besteht aus mehreren über den Umfang verteilten, sich achsparallel zum Brennelement 1 erstreckenden und parallel durchströmten Doppelrohrelementen 5 mit einem in Reihe durchströmten Innenrohr 6 und einem Außenrohr 7.

Alle Innenrohre 6 sind auf einem gemeinsamen Teilkreis angebracht, welcher zwar konzentrisch mit dem gemeinsamen Teilkreis aller Außenrohre 7 ist, aber im Durchmesser größer als der Teilkreis für alle Außenrohre gewählt ist.

Dabei ist jedes Doppelrohrelement 5 mit der Eintrittsseite des Innenrohres 6 mit dem Verbrennungsluftkanal 4 verbunden. Die Verbrennungsluft gelangt jeweils in einer Umlenkzone 8 an der Stirnseite des freien Endes in den zwischen Innenrohr 6 und Außenrohr 7 gebildeten Ringraum 9 und strömt in Richtung öleinspritzvorrichtungsnaher Stirnseite zurück. Dort mündet jeweils der zwischen Innenrohr 6 und Außenrohr 7 gebildete Ringraum 9 aller Doppelrohrelemente 5 in einer ringförmigen Sammelkammer 10 aus. Danach strömt die vorgewärmte Verbrennungsluft, ausgehend von dieser Sammelkammer 10, nach innen über eine Drallerzeugungseinrichtung 11 in den Bereich um die Öleinspritzvorrichtung 3 in die Verteilkammer 2.

Dazu ist die Drallerzeugungseinrichtung 11 ringförmig und symmetrisch zum Zentrum der Öleinspritzvorrichtung 3 ausgebildet. Vorzugsweise als Ringscheibe, welche von zugeordneten Begrenzungswänden 12, 13 in axialer Richtung beidseitig eingeschlossen ist und in radialer Richtung Kanäle für die Verbrennungsluft aufweist. In Umfangsrichtung ergibt sich eine gleichmäßige wellenförmige Gestalt aus alternierenden Kanälen, wobei die Wellenaußenseiten 14, 15 jeweils an zugeordneten Begrenzungswänden 12, 13 anliegen und zwischen den Welleninnenseiten und der jeweils gegenüberliegenden Begrenzungswand 14, 15 jeweils ein flacher Kanal für die Verbrennungsluft ausgebildet wird.

Beabstandet um die zentrale Öleinspritzvorrichtung 3 herum ist ein zugeordneter Konus 16 angeordnet, welcher den Übergang der brennstabnahen Begrenzungswand 12 der Drallerzeugungseinrichtung 11 in die Verteilkammer 2 bildet.

## Patentansprüche

1. Ölvormischbrenner mit einem Brennelement (1), einer Brenneroberfläche auf der äußeren Mantelfläche, einer Verteilkammer (2) unterhalb der Brenneroberfläche (2), einer zentralen Öleinspritzvorrichtung (3), einem an ein stromaufwärts angeordnetes Gebläse angeschlossenen Verbrennungsluftkanal (4) sowie einem Luftwärmetauscher für die Vorwärmung der Verbrennungsluft im Bereich der Brenneroberfläche, welcher aus mehreren über den Umfang verteilten, sich achsparallel zum Brennelement (1) erstreckenden und parallel durchströmten Doppelrohrelementen (5) mit einem in Reihe durchströmten Innenrohr (6) und einem Außenrohr (7) besteht, wobei jedes Doppelrohrelement (5) mit der Eintrittsseite des Innenrohres (6) mit dem Verbrennungsluftkanal (4) verbunden ist, und wobei die Verbrennungsluft jeweils in einer Umlenkzone (8) an der Stirnseite des freien Endes in den zwischen Innenrohr (6) und Außenrohr (7) gebildeten Ringraum (9) gelangt, in Richtung öleinspritzvorrichtungsnaher Stirnseite zurück strömt und dort als vorgewärmte Verbrennungsluft in die Verteilkammer (3) eintritt,
**dadurch gekennzeichnet, dass** jeweils Innenrohr (7) und Außenrohr (8) eines Doppelrohrelementes (6) exzentrisch ineinander angeordnet sind.

2. Ölvormischbrenner nach Anspruch 1,
**dadurch gekennzeichnet, dass** der jeweils zwischen Innenrohr (6) und Außenrohr (7) gebildete freie Querschnitt des Ringraumes (9) eines Doppelrohrelementes (5) im Verlauf des Strömungsweges der Verbrennungsluft etwa gleich bleibt.

3. Ölvormischbrenner nach Anspruch 1 oder 2,
**dadurch gekennzeichnet, dass** jeweils alle Innenrohre (6) auf einem gemeinsamen Teilkreis angebracht sind, welcher sich vom gemeinsamen Teilkreis aller Außenrohre (7) der Doppelrohrelemente (5) unterscheidet.

4. Ölvormischbrenner nach einem der Ansprüche 1 bis 3,
**dadurch gekennzeichnet, dass** der Teilkreis für alle Innenrohre (6) einen größeren Durchmesser aufweist als der Teilkreis für alle Außenrohre (7).

5. Ölvormischbrenner nach einem der Ansprüche 1 bis 4,
**dadurch gekennzeichnet, dass** der Teilkreis für alle Innenrohre (6) im Durchmesser so viel größer als der Teilkreis für alle Außenrohre (7) gewählt ist, dass sich jeweils über den Querschnitt des Ringraumes (9) eines Doppelrohrelementes (5) ein gleichmäßiger Temperaturgradient einstellt.
